# FASCICULE DE BREVET EUROPEEN

(11) **EP 3 983 896 B1**
(45) Date de publication et mention de la délivrance du brevet: **30.07.2025**
(21) Numéro de dépôt: 20742325.2
(22) Date de dépôt: 08.06.2020
(51) Int. Cl.: G06F 11/07

(54) **PROCÉDÉ DE DIAGNOSTIC D'UN CALCULATEUR ESCLAVE COMMUNIQUANT AVEC UN CALCULATEUR MAÎTRE**
VERFAHREN ZUR DIAGNOSE EINES MIT EINEM MASTER-RECHNER KOMMUNIZIERENDEN SLAVE-RECHNERS
METHOD FOR DIAGNOSING A SLAVE COMPUTER COMMUNICATING WITH A MASTER COMPUTER

(30) Priorité: 13.06.2019 FR 1906329
(43) Date de publication de la demande: 20.04.2022
(73) Titulaire: Stellantis Auto SAS, 78300 Poissy (FR)
(72) Inventeur: LANGARD, Kevin, 78140 Velizy Villacoublay (FR)
(74) Mandataire: ESIP
(86) Numéro de dépôt international: PCT/FR2020/050972
(87) Numéro de publication internationale: WO 2020/249893

(56) Documents cités:
- JP-B2- 5 272 383
- US-A1- 2009 271 062
- US-A1- 2011 119 556

## Description

### Domaine technique

L'invention concerne le diagnostic d'un calculateur en particulier d'un calculateur esclave communiquant avec un calculateur maître.

### Arrière-plan technologique

Les véhicules contemporains embarquent nombre de calculateurs assurant chacun une ou plusieurs fonctions, telles que par exemple la gestion de l'aide à la conduite, de l'antipatinage, de la répartition électronique du freinage ou encore la commande d'actionneurs pour assurer le fonctionnement optimal d'un moteur à combustion. Ces calculateurs sont aussi appelés UCE (« Unité de Commande Electronique » ou en anglais ECU « Electronic Control Unit »).

Certaines architectures électriques, embarquant ces calculateurs, comportent des calculateurs esclaves déportés d'un calculateur maitre. Un calculateur désigné « calculateur maître » est configuré pour commander au moins un calculateur embarqué désigné « calculateur esclave ». Pour ce faire, le calculateur maître communique avec le calculateur esclave via un réseau de communication locale désigné réseau multiplexé, par exemple un réseau de type CAN, signifiant « Controller Area Network » en langue anglaise et décrivant une voie de communication unique reliée en série à une pluralité d'unités de communication.

On comprend que la complexité croissante des fonctions électroniques embarquées entraîne une multiplication des boîtiers électroniques (ou calculateurs) montés sur les véhicules automobiles. Afin de limiter la diversité qui en résulte, il a été décidé d'utiliser des calculateurs esclaves dits génériques. Ces calculateurs esclaves génériques sont identiques (du point du matériel mais également du point du point du logiciel) quel que soit le nombre de fonction dont ils ont la charge.

Pour faciliter la maintenance et le diagnostic des véhicules, chacun de ces calculateurs comporte généralement un autodiagnostic (capacité du système à surveiller et détecter ses propres défaillances).

Pour cela, chaque calculateur enregistre au moment de la détection d'une anomalie, un code de défaut.

En réponse à une requête de diagnostic, le calculateur retourne une réponse indiquant le ou les codes défauts enregistré(s).

Un problème se pose lors du diagnostic des calculateurs esclaves dits génériques. Ainsi de tels calculateurs génériques diagnostiquent de façon systématique l'état de l'ensemble de leur sortie de pilotages. Ces calculateurs génériques ne sont pas spécialisés pour une fonction. Ainsi, pour activer une sortie donnée, ces calculateurs esclaves traitent à travers un réseau de communication une information liée à une requête spécifique ordonnant le pilotage d'un signal électrique donné.

Les calculateurs esclaves génériques ne connaissent pas la configuration fonctionnelle du véhicule sur lesquels ils sont déployés. Le calculateur esclave renvoi systématiquement l'état diagnostiqué de ses sorties au calculateur maitre, y compris si ces sorties ne sont connectées à aucune fonction du véhicule.

De ce fait, si une fonction n'est pas connectée à un boitier esclave sur un véhicule donné, le boitier esclave transmet quand même des défaillances qui provoque la génération de faux codes défauts.

Ainsi, l'absence de fonction sur un véhicule donné entraine la réalisation d'un diagnostic de défaillance par le calculateur esclave générique. Ce diagnostic génère la création de code défaut dit de « faux défaut » car le véhicule donné ne présente pas de défaillance, il n'est simplement pas équipé de certaines fonctions.

On connait un système dans lequel, un calculateur maître qui reçoit de calculateurs esclaves des codes défauts (anomalies détectées par les EC esclaves et codifiées) et qui stocke de manière horodaté ces codes défauts. Cependant rien n'est prévu pour gérer les faux défauts provenant du calculateur esclave. On connait aussi, par le document JP 5272383, un calculateur maître effectuant une opération d'autodiagnostic au démarrage d'un véhicule et transmettant l'opération d'autodiagnostic et une commande de surveillance de l'état opérationnel à chaque expiration d'une période prédéterminée. Chaque calculateur esclave effectue l'opération d'autodiagnostic au démarrage du véhicule et lors de la réception d'une commande de surveillance de l'état opérationnel, et transmet le résultat au calculateur maître.

### Résumé de l'invention

Un objet de la présente invention est de proposer une solution pour améliorer la situation et en particulier éviter des diagnostics erronés liés à l'apparition de faux défaut dans une architecture comportant un calculateur maître et un calculateur esclave générique.

Selon un premier aspect, l'invention concerne un procédé de diagnostic d'un calculateur esclave communiquant avec un calculateur maître, lesdits calculateur étant embarqués dans un véhicule, ledit procédé comportant des étapes de :
- Réception d'un code défaut provenant du calculateur esclave,
- Détermination si le code défaut reçu est associé à une fonction du véhicule,
- Enregistrement en mémoire du code défaut seulement si le code défaut est associé à une fonction du véhicule.

Avec l'invention les faux défauts signalés par un calculateur esclave sont détecté et ignoré par le calculateur maître. Ceci permet de ne pas réaliser de diagnostic erroné basé sur ces faux défauts. Ceci permet aussi de ne pas encombrer la mémoire avec des codes défauts inutiles. Cette solution a aussi pour avantage de ne pas nécessiter de modifier le fonctionnement du calculateur esclave.

Avantageusement, le calculateur maître comporte en mémoire une table indiquant des codes défauts à mémoriser ou à filtrer, ladite table étant utilisée lors de l'étape de détermination si la code défaut reçu est associé à une fonction du véhicule.

Avantageusement, le code défaut indiquant un défaut d'une sortie pilotée du calculateur esclave, le procédé de diagnostic d'un calculateur esclave communiquant avec un calculateur maître selon l'invention comporte en outre une étape d'émission d'une commande, à destination du calculateur esclave, d'inhibition de ladite sortie pilotée.

Avantageusement, le procédé de diagnostic d'un calculateur esclave communiquant avec un calculateur maître selon l'invention comporte en outre une étape d'émission d'une alerte à destination du conducteur pour lui signaler la détection du défaut.

Avantageusement, le code défaut correspond à l'un des défauts suivants :
- Défaut de court-circuit à la masse,
- Défaut de court-circuit à l'alimentation,
- Défaut de circuit ouvert,
- Défaut de sur échauffement en température,
- Défaut de surtension.

L'invention porte aussi sur un calculateur destiné à être embarqué dans un véhicule et à communiquer avec un calculateur esclave caractérisé en ce qu'il est configuré pour mettre en œuvre le procédé selon l'invention.

L'invention porte aussi sur un véhicule caractérisé en ce qu'il comporte un calculateur selon l'invention.

L'invention porte aussi sur un produit programme d'ordinateur comportant des instructions adaptées pour l'exécution des étapes du procédé selon l'invention, lorsque le programme d'ordinateur est exécuté par au moins un processeur.

### Brève description des figures

D'autres caractéristiques et avantages de l'invention ressortiront de la description des modes de réalisation non limitatifs de l'invention ci-après, en référence aux figures annexées, sur lesquelles :
La fig. 1 illustre de façon schématique un réseau embarqué, selon un exemple de réalisation particulier de la présente invention ;
La fig.2 illustre schématiquement un calculateur, selon un exemple de réalisation particulier de la présente invention ;
La fig. 3 illustre schématiquement un organigramme des différentes étapes d'un procédé de diagnostic d'un calculateur esclave communiquant avec un calculateur maître, selon un exemple de réalisation particulier de la présente invention.

### Description des modes de réalisation

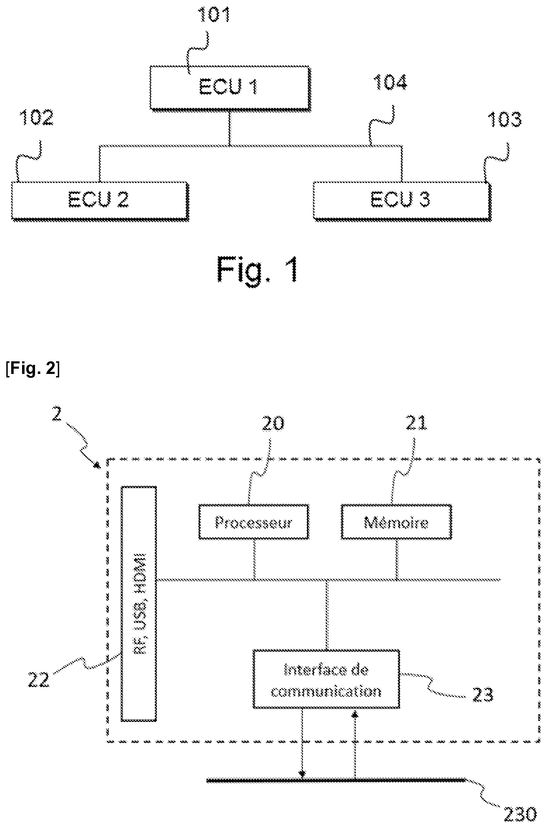

On a représenté sur la figure 1, un système électronique embarqué à bord d'un véhicule automobile, ce système étant désigné par la référence générale 1 sur ces figures. Un tel système comporte plusieurs calculateurs, également appelés ECU, désignés par les références générales 101 102, 103, et qui sont raccordés les uns aux autres par l'intermédiaire d'un réseau de transmission d'informations multiplexé, constitué par exemple par un bus multiplexé de transmission de données, désigné par la référence générale 104 sur cette figure.

Dans un tel système, l'un des calculateurs est un calculateur maître, tandis que les autres calculateurs sont des calculateurs esclaves. C'est ainsi par exemple que dans le cas représenté sur la figure 1, le calculateur maître est le calculateur désigné par la référence générale 101, tandis que les autres calculateurs à savoir les calculateurs ECU 2 et 3, désignés par les références générales 2 et 3 respectivement, sont des calculateurs esclaves.

A titre d'exemple, le calculateur maître 101 peut être une passerelle. Une passerelle est un module électronique organisé autour d'un microprocesseur, qui gère un certain nombre d'équipements électriques du véhicule automobile. Ce module, commande, par exemple, l'éclairage intérieur du véhicule, le verrouillage/déverrouillage des portes et du coffre, le fonctionnement des vitres et, le cas échéant, du toit ouvrant électrique, le cadencement des essuie-glace, les temporisations de certains équipements tel que, par exemple, le système d'alarme. Ce module gère éventuellement le dialogue entre le système anti-démarrage et le calculateur moteur du véhicule.

Ce module assure aussi une fonction de passerelle entre une pluralité de réseau CAN, autrement dit, elle relie différents réseaux et permet de faire circuler des données entre ces réseaux.

Toujours à titre d'exemple, le calculateur esclave 102 peut être un module électronique IDB. Un module électronique IDB comporte une pluralité de moyens de commutation et de distribution électrique destinés commander des calculateurs supplémentaires assurant des prestations supplémentaires. Le module électronique IDB peut par exemple être utilisé pour ajouter une prise 12V ou une prise USB supplémentaires ou pour ajouter un éclairage d'ambiance ou encore pour alimenter en électricité et commander un système de chauffage de siège.

La fig. 2 illustre schématiquement un calculateur 2, selon un exemple de réalisation particulier et non limitatif de la présente invention. Des exemples d'un tel calculateurs 2 comprennent, sans y être limités, un équipement électronique embarqué tel qu'un ordinateur de bord d'un véhicule, un calculateur électronique tel qu'une UCE.

Les éléments du calculateur 2, individuellement ou en combinaison, peuvent être intégrés dans un unique circuit intégré, dans plusieurs circuits intégrés, et/ou dans des composants discrets. Le calculateur 2 peut être réalisé sous la forme de circuits électroniques ou de modules logiciels (ou informatiques) ou encore d'une combinaison de circuits électroniques et de modules logiciels. Selon différents modes de réalisation particuliers, le calculateur 2 est couplé en communication avec d'autres dispositifs ou systèmes similaires, par exemple par l'intermédiaire d'un bus de communication ou au travers de ports d'entrée / sortie dédiés.

Le calculateur 2 comprend un (ou plusieurs) processeur(s) 20 configurés pour l'exécution des instructions du ou des logiciels embarqués dans le calculateur 2. Le processeur 20 peut inclure de la mémoire intégrée, une interface d'entrée/sortie, et différents circuits connus de l'homme du métier. Le calculateur 2 comprend en outre au moins une mémoire 21, correspondant par exemple à une mémoire volatile et/ou non volatile.

La mémoire 21 comprend par exemple des paramètres associés à l'exécution du ou des logiciels embarqués. La mémoire 21 comprend en outre l'information représentative du résultat du test de conformité du calculateur, par exemple dans un registre déterminé. Selon une variante, le calculateur comprend une mémoire additionnelle pour le stockage de l'information représentative du résultat du test de conformité du calculateur. Le code informatique du ou des logiciels embarqués comprenant les instructions à charger et exécuter par le processeur est par exemple stocké sur la mémoire 21.

Selon un mode de réalisation particulier et non limitatif, le calculateur 2 comprend un bloc 22 d'éléments d'interface pour communiquer avec des dispositifs externes, par exemple un outil de diagnostic, un serveur distant ou le « cloud », des capteurs odométriques, un capteur GPS. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Des données, par exemple l'information représentative du résultat du test de conformité, sont par exemples chargées vers le calculateur 2 via l'interface du bloc 22 en utilisant un réseau Wi-Fi^{®} tel que selon IEEE 802.11 ou un réseau mobile tel qu'un réseau 4G (ou LTE Advanced selon 3GPP release 10 - version 10) ou 5G.

Selon un autre mode de réalisation particulier, le calculateur 2 comprend une interface de communication 23 qui permet d'établir une communication avec d'autres dispositifs (tels que d'autres calculateurs) via un canal de communication 230. L'interface de communication 23 correspond par exemple à un transmetteur configuré pour transmettre et recevoir des informations et/ou des données via le canal de communication 230. Le canal de communication 230 correspond par exemple à un réseau filaire de type CAN (de l'anglais « Controller Area Network » ou en français « Réseau de contrôleurs »).

Selon une variante de réalisation particulière non représentée sur la figure 2, le calculateur 2 peut fournir des signaux de sortie à un ou plusieurs dispositifs externes, tels qu'un écran d'affichage, un ou des haut-parleurs et/ou d'autres périphériques (lecteur de DVD, un système de projection) via respectivement des interfaces de sortie adaptées. Il est ainsi possible selon cette variante de réalisation particulière d'interroger la mémoire du calculateur (par exemple via une interface homme-machine (IHM) pour déterminer la conformité ou non-conformité du calculateur en fonction de l'information représentative du résultat du test de conformité du calculateur). Selon une variante, l'un ou l'autre des dispositifs externes est intégré au calculateur 2.

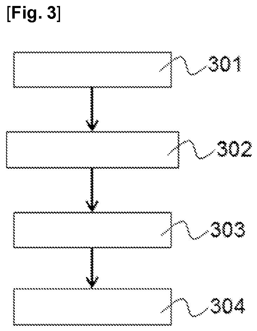

La fig. 3 illustre un organigramme des différentes étapes d'un procédé de diagnostic d'un calculateur esclave 102,103 communiquant avec un calculateur maître 101, selon un exemple de réalisation particulier et non limitatif de la présente invention. Le procédé est mis en œuvre par le calculateur maître 101.

Dans une première étape 301, le calculateur maitre 101 réceptionne un code défaut provenant du calculateur esclave. Il s'agit par exemple d'un code défaut correspondant à l'un des défauts suivants : défaut de court-circuit à la masse, défaut de court-circuit à l'alimentation, défaut de circuit ouvert, défaut de sur échauffement en température ou défaut de surtension.

Dans une deuxième étape 302, le calculateur maitre 101 détermine si le code défaut reçu est associé à une fonction du véhicule. Pour ce faire, dans lequel, le calculateur maître 101 comporte par exemple une mémoire dans laquelle est stockée une table prédéterminée indiquant des codes défauts à mémoriser ou à filtrer.

Dans une troisième étape 303, le calculateur maître enregistre en mémoire le code défaut seulement si le code défaut est associé à une fonction du véhicule. Si le code n'est pas associé à une fonction du véhicule, alors il est ignoré. Ainsi la mémoire n'est pas surchargée par des codes défauts non pertinents.

Dans une quatrième étape 304, optionnelle, le calculateur maitre 101 commande l'émission d'une alerte à destination du conducteur pour lui signaler la détection du défaut.

## Revendications

1. Procédé de diagnostic d'un calculateur esclave (102,103) communiquant avec un calculateur maître (101), lesdits calculateur étant embarqués dans un véhicule, ledit procédé comportant des étapes de :
- Réception (301) d'un code défaut provenant du calculateur esclave,
- Détermination (302) si le code défaut reçu est associé à une fonction du véhicule,
- Enregistrement (303) en mémoire du code défaut seulement si le code défaut est associé à une fonction du véhicule ledit procédé étant mis en œuvre par le calculateur maître (101).

2. Procédé de diagnostic d'un calculateur esclave (102,103) communiquant avec un calculateur maître (101) selon la revendication 1, dans lequel, le calculateur maître (101) comporte en mémoire une table indiquant des codes défauts à mémoriser ou à filtrer, ladite table étant utilisée lors de l'étape de détermination (302) si la code défaut reçu est associé à une fonction du véhicule.

3. Procédé de diagnostic d'un calculateur esclave (102,103) communiquant avec un calculateur maître (101) selon l'une des revendications précédentes, le code défaut indiquant un défaut d'une sortie pilotée du calculateur esclave, comportant en outre une étape d'émission (304) d'une commande, à destination du calculateur esclave, d'inhibition de ladite sortie pilotée.

4. Procédé de diagnostic d'un calculateur esclave (102,103) communiquant avec un calculateur maître (101) selon l'une des revendications précédentes, comportant en outre une étape d'émission (304) d'une alerte à destination du conducteur pour lui signaler la détection du défaut.

5. Procédé de diagnostic d'un calculateur esclave (102,103) communiquant avec un calculateur maître (101) selon l'une des revendications précédentes, dans lequel, le code défaut correspond à l'un des défauts suivants :
- Défaut de court-circuit à la masse,
- Défaut de court-circuit à l'alimentation,
- Défaut de circuit ouvert,
- Défaut de sur échauffement en température,
- Défaut de surtension.

6. Calculateur (101) destiné à être embarqué dans un véhicule et à communiquer avec un calculateur esclave (102,103) **caractérisé en ce qu'**il est configuré pour mettre en œuvre le procédé selon l'une des revendications précédentes.

7. Véhicule **caractérisé en ce qu'**il comporte un calculateur (101) selon la revendication précédente.

8. Produit programme d'ordinateur comportant des instructions adaptées pour l'exécution des étapes du procédé selon l'une des revendications 1 à 5, lorsque le programme d'ordinateur est exécuté par au moins un processeur.

## Patentansprüche

1. Verfahren zum Diagnostizieren eines Slave-Computers (102, 103), der mit einem Master-Computer (101) kommuniziert, wobei der Computer in einem Fahrzeug befördert wird, wobei das Verfahren Schritte umfasst:
- Empfang (301) eines Fehlercodes vom Slave-Rechner,
- Feststellung (302), ob der empfangene Fehlercode mit einer Funktion des Fahrzeugs verknüpft ist,
- Aufzeichnen (303) des Fehlercodes im Speicher nur dann, wenn der Fehlercode mit einer Funktion des Fahrzeugs verknüpft ist, wobei das Verfahren von der Hauptsteuergerät (101) ausgeführt wird.

2. Verfahren zum Diagnostizieren eines Slave-Steuergeräts (102, 103), das mit einem Master-Steuergerät (101) nach Anspruch 1 kommuniziert, wobei das Master-Steuergerät (101) eine Tabelle im Speicher hat, die Fehlercodes anzeigt, die gespeichert oder gefiltert werden sollen, wobei die Tabelle im Bestimmungsschritt (302) verwendet wird, ob der empfangene Fehlercode mit einer Funktion des Fahrzeugs verknüpft ist.

3. Verfahren zum Diagnostizieren eines Slave-Computers (102, 103), der mit einem Master-Computer (101) nach einem der vorhergehenden Ansprüche kommuniziert, wobei der Fehlercode einen Fehler in einem gesteuerten Ausgang des Slave-Computers anzeigt, ferner einen Schritt des Sendens (304) eines Befehls an den Slave-Computer zur Sperrung des pilotierten Ausgangs umfasst.

4. Verfahren zum Diagnostizieren einer Slave-Steuereinheit (102, 103), die mit einer Master-Steuereinheit (101) nach einem der vorhergehenden Ansprüche kommuniziert, ferner umfassend einen Schritt zum Auslösen (304) einer Warnung an den Fahrer, um ihn über die Erkennung des Fehlers zu informieren.

5. Verfahren zum Diagnostizieren eines mit einem Master-Computer (101) kommunizierenden Slave-Computers (102, 103) nach einem der vorhergehenden Ansprüche, wobei der Fehlercode einem der folgenden Fehler entspricht:
- Erdschluss, Kurzschluss,
- Kurzschlussfehler an der Stromversorgung,
- Fehler im offenen Stromkreis,
- Fehlende Überhitzung der Temperatur,
- Fehler bei Überspannung.

6. Computer (101) zum Einbetten in ein Fahrzeug und zum Kommunizieren mit einem Slave-Computer (102, 103), **dadurch gekennzeichnet, dass** er so konfiguriert ist, dass er das Verfahren nach einem der vorhergehenden Ansprüche ausführt.

7. Fahrzeug, **dadurch gekennzeichnet, dass** es einen Computer (101) nach dem vorhergehenden Anspruch umfasst.

8. Computerprogramm, das geeignete Anweisungen zum Ausführen der Verfahrensschritte nach einem der Ansprüche 1 bis 5 enthält, wobei das Computerprogramm von mindestens einem Prozessor ausgeführt wird.

## Claims

1. A method for diagnosing a slave computer (102,103) communicating with a master computer (101), said computer being carried in a vehicle, said method comprising steps of:
- Receipt (301) of a fault code from the slave computer,
- Determination (302) whether the fault code received is associated with a function of the vehicle,
- Recording (303) the fault code in memory only if the fault code is associated with a function of the vehicle, said method being carried out by the master control unit (101).

2. A method for diagnosing a slave control unit (102,103) communicating with a master control unit (101) according to claim 1, wherein the master control unit (101) has in memory a table indicating fault codes to be stored or filtered, said table being used in the determination step (302) whether the received fault code is associated with a function of the vehicle.

3. A method for diagnosing a slave computer (102,103) communicating with a master computer (101) according to one of the preceding claims, the fault code indicating a fault in a controlled output of the slave computer, further comprising a step of transmitting (304) a command, to the slave computer, for the inhibition of said piloted output.

4. A method for diagnosing a slave control unit (102,103) communicating with a master control unit (101) according to one of the preceding claims, further comprising a step for issuing (304) an alert to the driver to notify him of the detection of the fault.

5. A method for diagnosing a slave computer (102,103) communicating with a master computer (101) according to one of the preceding claims, wherein the fault code corresponds to one of the following faults:
- Ground short-circuit fault,
- Short-circuit fault at the power supply,
- Open circuit fault,
- Lack of overheating in temperature,
- Surge fault.

6. A computer (101) for being embedded in a vehicle and for communicating with a slave computer (102,103) **characterized in that** it is configured to carry out the method according to one of the preceding claims.

7. A vehicle **characterised in that** it comprises a computer (101) according to the preceding claim.

8. A computer program containing suitable instructions for carrying out the process steps according to any of claims 1 to 5, where the computer program is executed by at least one processor.
